# EUROPEAN PATENT APPLICATION

(11) **EP 3 583 990 A1**
(43) Date of publication of application: **25.12.2019**
(21) Application number: 18178301.0
(22) Date of filing: 18.06.2018
(51) Int. Cl.: B01D 15/22, G01N 30/60, C08J 5/10, B29C 45/00, B01D 15/32

(54) **CHROMATOGRAPHY COLUMNS**

(71) Applicant: Biotage AB, 751 03 Uppsala (SE)
(72) Inventor: STRANDELL, Axel, 743 40 STORVRETA (SE); JOHNSSON, Lars, 754 48 UPPSALA (SE); NORMANN, Per, 754 20 UPPSALA (SE)
(74) Representative: Brann AB

(57) **Abstract**

The present invention relates to a chromatography column prepared from a polymeric material, wherein an electrically conductive material has been embedded. More specifically, the chromatography column according to the invention has a sufficient content of electrically conductive material to reduce or eliminate electrostatic discharge while it presents a mechanical strength sufficient to withstand the pressures commonly used to drive a solvent across a column in FLASH chromatography.

The invention also embraces a method of manufacturing such chromatography columns, as well as the use thereof to purify and/or isolate target compound(s).

## Description

### Technical Field

The present invention relates to the field of chromatography, and in particular to liquid column chromatography where plastic columns including hydrophobic adsorbents are used at high flow rates of organic solvents. More specifically, the invention relates to novel chromatography columns that avoid or at least reduce the risk of dissipation of static electricity that are known to occur under such conditions, a method of manufacturing such columns; as well as their use e.g. in FLASH chromatography.

### Background

In chromatography, a target component is separated from a liquid including other non-desired components by differential interaction with a stationary phase. Chromatography may be preparative or analytical. The purpose of preparative chromatography is to separate the components of a mixture for later use, and is thus a form of purification. Analytical chromatography commonly utilizes smaller amounts of material for establishing the presence or measuring the relative proportions of analytes in a mixture.

Different chromatography processes will require different equipment and consumables. For example, in large scale processing, such as bioprocessing, steel columns are designed to accommodate substantial volumes of liquid, such as fermentation broths that include medically active proteins or peptides. The liquids are often aqueous, and conditions such as packings and flow rates are adapted not to impact the sensitive target molecules. In laboratories, where chromatography in a smaller scale is commonly used either to prepare a sample for subsequent analysis or for intermediate purification in organic synthesis, other materials are more frequently used. Columns may be made of plastic, which is practical in terms of price and manufacture, and liquids often include organic solvents. It is essential to use plastic materials that are sufficiently stable from a mechanical point of view to withstand desired flow rates, while from a chemical point of view they are obviously required to be non-reactive.

In FLASH chromatography, silica particles of relatively small size, such as 20-60um, are commonly used as the stationary phase. Due to the restriction of flow caused by the small particles, pressurized liquid is used to drive the liquid through the stationary phase resulting in high resolution chromatography, also known as medium pressure chromatography since the pressure applied is still lower than in High Pressure Chromatography (HPLC). FLASH columns are commonly made in plastic materials capable of withstanding the organic solvents that often constitute the samples i.e. the liquid applied. In some FLASH processes, the column is dry-packed and the sample is applied at the column top before a solvent is driven through the column to differentially partition the components across the silica column.

As in all use of flammable organic solvents, care is required in chromatography to manage the risk of fire, especially in a laboratory environment where any flame could have very serious consequences. It is also known that when liquid is passed through thin tubing or columns at a high flowrate, as in some chromatography systems, the electrostatic charge of the flowing liquid generates static electricity, sometimes denoted flow electrification. The charge level will be higher for poorly conductive solvents such as non-polar solvents in plastic tubing; and the presence of air may also amplify the static electricity.

WO 2015/097498 (Agilent Technologies, Inc.) relates to an electrostatic discharge protected device for conducting a fluid through at least one lumen to a fluid separation apparatus. More specifically, the device is a tubing which comprises an electrically conductive section configured for conducting electric charge. According to WO 2015/097498, charge carriers generated within the lumen of the tubing which therefore are not easily accessible can be removed by a mechanism of conducting them through the tubing. In particular, this can be achieved by an appropriate choice of geometrical properties, such as radial thickness, and/or by appropriate choice of the material properties of the electrically conductive section and the remaining portion of the tubing. The electrically conducting material should not show any undesired interaction with the fluid, such as dissolving harmful components of the tubing. In addition, the fluid flow through the tubing should not be negatively influenced by the material. Embodiments are stated to be based on most conventionally available HPLC systems, such as Agilent 1290 Series Infinity system, Agilent 1200 Series rapid Resolution LC system or Agilent 1100 HPLC series.

However, with the increased demand for faster and more efficient chromatography processes using plastic columns and tubing, there is still a need in this field for improved methods that avoids the problems of electrostatic dissipation.

### Summary of the Invention

One object of the present invention is to provide chromatography columns which are safer to use in environments where flammable solvents are used.
More specifically, the invention relates to solutions to the problems associated with the electrostatic discharge that may occur between a mobile phase and a chromatography column under certain conditions.
A specific object of the invention is to provide such chromatography columns which can withstand pressures commonly occurring in FLASH chromatography.

### Brief description of the drawings

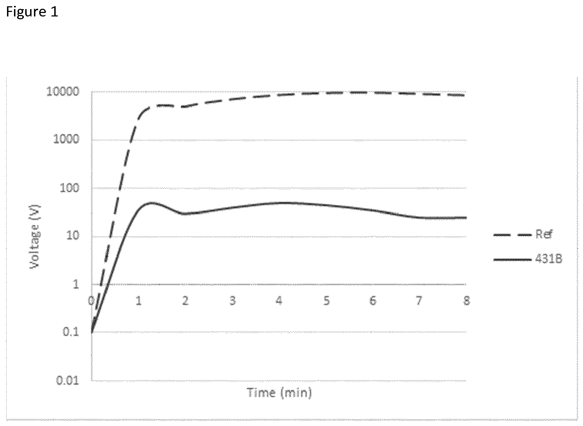

Figure 1 shows the difference in the static electricity build-up between a chromatography column according to the invention and a standard, as described in more detail in Example 1.

### Definitions

The term "column" is used herein for any vessel, container or tubular housing, such as a cartridge, configured to hold the stationary phase during chromatography.
The term "ESD" is an abbreviation of electrostatic dissipation or discharge, and refers to the sudden flow of electricity between two electrically charged objects such as a flowing liquid and a stationary phase in chromatography.

### Detailed description

A first aspect of the invention is a chromatography column prepared from a polymeric material, wherein an electrically conductive material has been embedded.

The chromatography column according to the invention is provided with an inlet and an outlet at its opposite ends, and may be designed according to standard practice with frits, removable caps and the like as conventionally used. In one embodiment of the invention, a sample compartment has been arranged at the inlet end of the column for applying a sample in a step preceding the application of solvent. Such sample compartments are well known in the area, such as in FLASH chromatography, and are used for the application of a sample to a pre-packed column. The column according to the invention may be pre-packed with adsorbent, i.e. supplied commercially as a packed column. Alternatively, the column according to the invention is provided as an empty column, which may be packed as appropriate by its user. Thus, in one embodiment, the chromatography column comprises a packing of dry adsorbent, and optionally the above-described sample compartment.

The chromatography column according to the invention is advantageously packed with an adsorbent that require the use of organic solvents. As the electrically conductive material embedded in the column will eliminate or at least substantially reduce any electrostatic dissipation that arise during chromatography, the present invention may reduce the risk of fire and/or explosion due to sparks contacting flammable organic solvents. Even though this risk is normally small, and accidents are rare, it is of a general interest to avoid due to the severe consequence if it would occur in a laboratory environment.

Adsorbents used with organic solvents are commonly hydrophobic, and the chromatography process may utilize hydrophobic interaction either in bind-elute mode, such as in hydrophobic interaction chromatography (HIC) or in reverse phase chromatography (RPC). The present invention is advantageously related to FLASH chromatography, i.e. medium-pressure chromatography, as will be discussed in more details below in relation to the third aspect of the invention. The adsorbent may be selected from the group consisting of any hydrophobic and/or functionalized adsorbents, such as particles of silica, such as silanized silica, silicon dioxide, glass, zeolite, polystyrene or any particles functionalized with carbon chains of suitable lengths to provide an appropriate degree of hydrophobicity for the intended purpose.

Silica particles suitable for column chromatography using organic solvents, such as in FLASH chromatography, are well known and commercially available in various degrees of porosity, particle size etc.

As mentioned above, the column according to the invention is prepared from a polymeric material which advantageously is a plastic, such as polyethylene. As appears from this specification, the inclusion of an electrically conductive material in a chromatography column is advantageous for any intended use where there is a risk of static electricity being generated. Thus, the skilled person will understand which for which combinations of polymeric material, solvent and flow rate the present invention provides the greatest advantages. Such conditions are well known in the area. As an illustrative example, the risk of ESD generation appears to be greater in standard FLASH chromatography columns designed for about 100g of adsorbent and larger, but may also occur with smaller columns depending on other conditions. The skilled person would be able to easily test if there is an ESD risk for a specified process, and may as a consequence choose to use columns according to the invention in order to operate safely.

Further, the present inventors have found that a conductive material may be embedded in the polymeric material without substantially impairing the strength required to withstand the pressure commonly used to pass an organic solvent across a column packed with hydrophobic particles. This was quite unexpected, and enables chromatography using solvents and adsorbents at pressures known to entail electrostatic discharge with substantially reduced, or even eliminated, risk for sparks or ignition of solvents. The conductive material is advantageously embedded in the plastic in the form of conductive particles, as will be discussed in more detail below in the context of the second aspect of the invention. In one embodiment, the chromatography column according to the invention is comprised of polyethylene into which a carbon-based conductor has been embedded.

Electrically conductive composites have been described; see e.g. I. Krupa et al in European Polymer Journal, Volume 43, Issue 6, June 2007, P. 2401-2413: Electrically conductive composites of polyethylene filled with polyamide particles coated with silver. Thus, the skilled person will be able to choose the appropriate technology and materials for preparing a chromatography column according to the invention with reference to available text books and other literature.

As the skilled person will appreciate, there are advantages in certain chromatographic applications to be able to visualise the contents of the column. For example, during equilibration of a dry-packed column, a visual inspection of the liquid front as it travels across the column is often used to decide when completed. Thus, in one embodiment, the polymeric material and the electrically conductive material are selected in order to provide a transparent, or at least substantially transparent, column.

The skilled person will also appreciate that the proportion of electrically conductive material will depend on parameters such as the intended flow rate, the particle size and the pressure applied to the column, as well as the nature, especially the flammability, of the organic solvent which will be used to elute the target from the column.

In one embodiment, the conductive material has been embedded in the polymeric material in a volume sufficient to impart to the column a resistivity of 10⁷-10⁹ Ωcm.

As mentioned above, some polymeric materials may be negatively impacted in terms of mechanical strength by the inclusion of electrically conductive material. The skilled person will be able to balance the risk of electric discharge against the requirement of strength of the polymeric material. In an illustrative embodiment, the strength of the column withstands pressures imparted by liquid flows of at least 300 psi, such as 300-400 psi or above 400 psi.

As the skilled person will appreciate, the chromatography column according to the invention may advantageously be used in automated purification systems controlled by microprocessors, such as conventional FLASH chromatography systems, such as Isolera™, or the more recently introduced Accelerated Chromatographic Isolation (ACI™), both available from Biotage.se.

A second aspect of the invention is a method of manufacturing a chromatography column according to the invention, which may present any one of the above-discussed features as well as combinations thereof. Thus, the invention relates to such a method, wherein a polymeric material is extruded or injection moulded as a mixture with an electrically conductive material. As the skilled person will appreciate, the specific technology used is selected based on parameters such as the size of the desired column. For example, a larger chromatography column may be extruded, while mid-sized and smaller columns are conveniently injection-moulded. Non-limiting examples of electrically conductive materials are e.g. carbon black or graphite. As the skilled person is aware, there are many alternative conductive materials, such as conductive composites, that are equally useful. The present invention may include any kind of conductive material, provided the advantageous properties described herein are obtained. The conductive materials are advantageously in the form or particles, such as substantially spherical particles.

An additional unexpected advantage of the chromatography column according to the invention is that the packing thereof with dry adsorbent was found to be faster that prior art packing methods. Without wishing to be bound by any theory, it may be assumed that the conductive material embedded in the chromatography column reduces the extent of chemical interactions between an adsorbent such as silica and a polymeric material such as polyethylene. Thus, the packing rate may be increased substantially by using the invention. This advantage is expected with the packings and columns discussed above. In fact, the possibility of packing the column at an increased rate as compared to standard columns may appear with smaller columns as well, such as columns designed for about 50g of adsorbent.

Consequently, the present invention relates to a method wherein a polymeric material is extruded or injection moulded as a mixture with an electrically conductive material, followed by dry packing of the column so produced with dry adsorbent.

A third aspect of the invention is the use of a chromatography column according to the invention in the purification and/or isolation of at least one target compound using a hydrophobic adsorbent and at least one organic solvent. The adsorbent, solvent(s) and other details regarding the column and its manufacture may be as described above in relation to the first and/or the second aspects of the invention.

The present inventors have found that a chromatography column according to the invention which presents the advantage of reducing electrostatic discharge during chromatography may at the same time present a sufficient mechanical strength to withstand the pressures commonly used in FLASH chromatography. In addition, the chromatography column according to the invention has shown to be safe in use, i.e. not to leak any components of electrically conductive material.

Thus, in an illustrative embodiment, the third aspect of the invention is a FLASH chromatography process, which may be performed at pressures and flow rates which are well comparable with conventional chromatography columns, which are not electrically conductive.

### Detailed description of the drawing

Figure 2 shows the difference in the static electricity build-up between a chromatography column according to the invention and a standard, as described in more detail in Example 1 wherein the X axis represents the time (in minutes) while the Y axis represents the voltage (in V).

It appears from Figure 1 that the invention, illustrated by the lower curve, that the ESD generation of the standard column is about 100 times greater than the invention. Thus, the invention clearly prevents the build-up of static electricity under the tested conditions.

### EXPERIMENTAL PART

The present examples are provided for illustrative purposes only, and are not intended to be limiting the invention as defined by the appended claims. All references provided below or elsewhere in the present application are hereby included herein via reference.

### Example 1: Reduction of static electricity during chromatography

In flash chromatography, static electricity build-up on the column surface is a well known problem, in particular when non-polar solvents are used. In order to test the chromatography columns according to the invention, 100g flash chromatography columns were equilibrated in an Isolera™ system (http://www.biotage.com/).

In this example, flash chromatography columns casted in a doped plastic material in accordance with the invention, here referred to as 431B, were measured for static electricity and compared with standard flash chromatography cartridges as a reference.

The electric charge on the flash chromatography column surface was measured during a chromatography run in accordance with well known methods using an electrostatic field meter (Simco FMX-004 available from https://www.simco-ion.com/industrial).

The solvent used to equilibrate the flash chromatography column was a gradient of ethyl acetate in heptane. During the test, the respective proportions of these solvents were gradually changed: from 10% ethyl acetate and 90% heptane to 30% ethyl acetate and 70% heptane.

The build-up of static electricity on the flash chromatography column surfaces are presented in the plot provided as Figure 1. As appears from the figure, the static electricity measured on the surface of the flash chromatography columns with standard plastic reached levels close to 10kV; whereas the build-up of static electricity on the flash chromatography columns according to the invention (431A) was close to zero during the whole test.

### Example 2: Mechanical strength of chromatography columns including an electrically conducting material

The pressure in the flash chromatography columns described above was measured in a dedicated test rig. The test rig used had one static reservoir, which was used to pack the flash chromatography columns. In addition to this, a pump was used where the flow rate was adjustable in the range of 0-10 ml/min. The pressure measuring device (Jumo dtrans p30 available from http://www.jumo.se/sv_SE/index.html) was set at an accuracy specified as 0.2 to 0.5%, depending on the pressure range being measured. The pressure was measured in the tubing and the data logged in software in a computer.

In order to test one illustrative column of the invention, the burst pressure of standard and doped plastic flash chromatography columns was measured. The illustrative 100g flash chromatography column moulded in the ESD plastics according to the invention has a mean burst pressure of 37.2 bar. The burst pressure of the standard flash chromatography cartridges is 42 bar. The difference in burst pressure indicates that the columns according to the invention may be used under standard conditions at pressures very similar to those of the standard columns. For the highest pressures, certain considerations may be taken into account in the manufacture of the column.

## Claims

1. A chromatography column prepared from a polymeric material, wherein an electrically conductive material has been embedded.

2. A column according to claim 1, which is provided with an inlet and an outlet at its opposite ends, wherein at the inlet end, a sample compartment has been arranged.

3. A column according to claim 1 or 2, which column comprises a packing of dry adsorbent.

4. A column according to claim 3, wherein the adsorbent is comprised of silica particles.

5. A column according to any one of the preceding claims, wherein the polymeric material is a plastic wherein the conductive material has been embedded as particles.

6. A column according to any one of the preceding claims, which is transparent.

7. A column according to any one of the preceding claims, wherein the conductive material has been embedded in the polymeric material in a volume sufficient to impart to the column a resistivity of 10⁷-10⁹ Ωcm.

8. A column according to any one of the preceding claims, wherein the strength of the column withstands pressures imparted by liquid flows of at least 400 psi.

9. A method of manufacturing a chromatography column by providing a polymeric material, and extruding or injection moulding of the polymeric material as a mixture with an electrically conductive material.

10. A method according to claim 9 for the manufacture of an ESD-protected FLASH chromatography column.

11. A method according to claim 9 or 10, wherein a polymeric material is extruded or injection moulded as a mixture with an electrically conductive material, followed by dry packing of the column so produced with dry adsorbent.

12. A method of purification and/or isolation of a target compound from a liquid sample, wherein a liquid sample comprising at least one target compound is applied to a chromatography column according to any one of claims 1-8, or a column manufactured according to claim 9-11, packed with silica; and pressure is applied to drive an organic solvent across the column.

13. Use of a column according to any one of claims 1-8, or manufactured according to any one of claims 9-11, in a chromatographic process including a hydrophobic adsorbent and at least one organic solvent.

14. Use according to claim 13, which is FLASH chromatography.

15. Use according to claim 13 or 14, wherein the target compound is an analytical target; or a product or an intermediate of organic synthesis.
